# EUROPEAN PATENT APPLICATION

(11) **EP 4 503 314 A1**
(43) Date of publication of application: **05.02.2025**
(21) Application number: 24191757.4
(22) Date of filing: 30.07.2024
(51) Int. Cl.: H01M 50/503, H01M 50/505

(54) **BATTERY PACK WITH FLEXIBLE BUSBAR**

(30) Priority: 02.08.2023 US 202318229506; 02.08.2023 US 202318229507
(71) Applicant: Apple Inc., Cupertino, CA 95014 (US)
(72) Inventor: WANG, Pengchuan, Cupertino, 95014 (US); HASKINS, Brian J., Cupertino, 95014 (US); DALKE, Claire E., Cupertino, 95014 (US); MAYER, Matthew A., Cupertino, 95014 (US); TSAI, Michael H., Cupertino, 95014 (US); BOHNEY, Nathan J., Cupertino, 95014 (US); PAN, Sam, Cupertino, 95014 (US)
(74) Representative: COPA Copenhagen Patents

(57) **Abstract**

A flexible busbar comprises a first busbar layer including a first plurality of busbar segments and a first bend between first busbar segments of the first plurality of busbar segments and a second busbar layer coupled to the first busbar layer. The second busbar layer includes a second plurality of busbar segments and a second bend between second busbar segments of the second plurality of busbar segments. The first plurality of busbar segments is substantially colinear with the second plurality of busbar segments and the second bend is substantially parallel with the first bend.

## Description

### CROSS-REFERENCES TO RELATED APPLICATIONS

This application claims priority to U.S. nonprovisional application No. 18/229,506, entitled "BATTERY PACK WITH FLEXIBLE BUSBAR," filed on August 2, 2023, and U.S. nonprovisional patent application No. 18/229,507, entitled "BATTERY PACK WITH SUPPORT TABS", filed August 2, 2023, which are hereby incorporated by reference herein in their entireties for all purposes.

### BACKGROUND OF THE INVENTION

As electronic devices develop in functionality, there is a commensurate demand on the battery cells which are used to power these electronic devices. At the same time, the size and weight constraints in electronic devices limit the number and size of the battery cells capable of being used in the electronic device. Accordingly, a need exists to maximize the energy provided by a battery pack while optimizing the shape and size of the battery pack.

### BRIEF SUMMARY OF THE INVENTION

One aspect of the disclosure provides for a flexible busbar that comprises a first busbar layer including a first plurality of busbar segments and a first bend between first busbar segments of the first plurality of busbar segments and a second busbar layer coupled to the first busbar layer. The second busbar layer includes a second plurality of busbar segments and a second bend between second busbar segments of the second plurality of busbar segments. The first plurality of busbar segments is substantially colinear with the second plurality of busbar segments and the second bend is substantially parallel with the first bend. The first bend may be biased to spread the first busbar segments away from each other and the second bend may be biased to spread the second busbar segments away from each other. The first bend may be biased to spread the first busbar segments away from each other in a first direction and the second bend may be biased to spread the second busbar segments away from each other in the first direction. The first busbar layer may include a third bend between a first intermediate busbar segment of the first busbar segments and a first lateral busbar segment of the first plurality of busbar segments, the second busbar layer may include a fourth bend between a second intermediate busbar segment of the second busbar segments and a second lateral busbar segment of the second plurality of busbar segments, and the third bend may be biased to spread the first intermediate busbar segment and the first lateral busbar segment in a second direction different than the first direction, and the fourth bend may be biased to spread the second intermediate busbar segment and the second lateral busbar segment in the second direction. The second direction may be opposite the first direction. The first busbar layer may include a fifth bend between a third intermediate busbar segment of the first busbar segments and a third lateral busbar segment of the first plurality of busbar segments, the second busbar layer may include a sixth bend between a fourth intermediate busbar segment of the second busbar segments and a fourth lateral busbar segment of the second plurality of busbar segments, the first bend may be positioned between the third and fifth bends along the first busbar layer, and the second bend may be positioned between the fourth and sixth bends along the first busbar layer. The first and second bends may be offset from each other. The first and second bends may be overlapping. The first and second bends may include a first arcuate shape. The first busbar layer may include a third bend and the second busbar layer includes a fourth bend, the third bend and fourth bend may include a second arcuate shape, and the first arcuate shape may have a larger radius than the second arcuate shape.

Another aspect of the disclosure provides for a battery pack that comprises a first battery cell, a second battery cell, and a flexible busbar electrically coupling, and positioned between, the first battery cell and the second battery cell. The flexible busbar includes busbar segments and a pre-formed bend therebetween. The first battery cell is positioned on the second battery cell and the busbar segments are overlapping on each other about the pre-formed bend in a closed state and the flexible busbar is configured to spread the first and second battery cells, and the busbar segments, away from each other to an open state. Iin the open state, the first and second battery cells may be positioned laterally from each other, and the busbar segments may be laterally spread from each other about the pre-formed bend. The battery pack may further comprise a battery management unit coupled to the first and second battery cells. The busbar segments may be substantially parallel with each other. The first and second battery cells may define a gap therebetween. The flexible busbar may be positioned between the first and second battery cells. The battery pack may further comprise a third battery cell, and the first battery cell may be positioned between the third battery cell and the second battery cell.

Another aspect of the disclosure provides for a method of assembling a battery pack that comprises electrically coupling a flexible busbar to a first battery cell, the flexible busbar including busbar segments and a pre-formed bend therebetween, and electrically coupling the flexible busbar to a second battery cell. The first and second battery cells are positioned laterally from each other and the busbar segments are laterally spread from each other about the pre-formed bend. The method further comprises bending the flexible busbar at the pre-formed bend along the flexible busbar to position the first battery cell on the second battery cell. The method may further comprise bending the flexible busbar at a second bend to position the first and second battery cells closer to each other. The flexible busbar may be positioned between the first and second battery cells.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1A depicts an isometric view of a battery pack in an open state according to embodiments of the disclosure.
FIG. 1B depicts an exploded view of the battery pack of FIG. 1A.
FIG. 1C depicts a partial view of the battery pack of FIG. 1A.
FIG. 2 depicts an exploded view of a busbar according to embodiments of the disclosure.
FIG. 3 depicts a partial, isometric view of a battery pack according to embodiments of the disclosure.
FIG. 4A depicts an isometric view of a battery pack in a closed state according to embodiments of the disclosure.
FIG. 4B depicts a partial, isometric view of the battery pack of FIG. 4A.
FIG. 4C depicts a partial, bottom view of the battery pack of FIG. 4A.
FIG. 5 depicts a partial, isometric view of a battery pack according to embodiments of the disclosure.
FIGS. 6A-6C depict a schematic view of a method of installing a battery pack according to embodiments of the disclosure.

### DETAILED DESCRIPTION OF THE INVENTION

Increasing the power output of a battery pack may involve certain challenges. For example, the battery cells (e.g., lithium-ion battery cells) housed in battery packs can achieve a certain maximum voltage with minimal risk of overcharging the battery cell. Once that voltage level is reached, further charging those battery cells may increase the risk of overcharging and damaging the battery cell. Accordingly, one way to increase the overall power output of a battery pack includes installing more battery cells within the battery pack. However, increasing the battery cell count within a battery pack includes other challenges. For example, electrically coupling the battery cells together to charge all the battery cells can prove challenging as the immobile nature of conventional busbars used to electrically couple the battery cells together may limit the battery pack to a shape and size that is not compatible with certain electronic devices.

The present disclosure addresses this issue by providing for a battery pack that can house multiple battery cells together to increase the total power output of the battery pack while orienting those battery cells in a space-efficient manner. Specifically, multiple battery cells can be stacked together in the battery pack while still being electrically coupled using a flexible busbar, thus increasing the total power output of the battery pack. At the same time, this flexible busbar can be flexed about one or more bends along the busbar such that the battery cells can overlap each other to in a manner that allows the battery pack to have a shape and size conducive to being coupled to electronic devices. For example, the flexible busbar may enable the battery cells to be more compactly positioned together to reduce the overall volume of the battery pack, thus decreasing the overall size of the battery pack. In this manner, the flexible busbar can facilitate an increased power output of a battery pack while optimizing the space occupied by the battery pack.

Several illustrative embodiments will now be described with respect to the accompanying drawings, which form a part hereof. The ensuing description provides embodiment(s) only and is not intended to limit the scope, applicability, or configuration of the disclosure. Rather, the ensuing description of the embodiment(s) will provide those skilled in the art with an enabling description for implementing one or more embodiments. It is understood that various changes may be made in the function and arrangement of elements without departing from the spirit and scope of this disclosure. In the following description, for the purposes of explanation, specific details are set forth in order to provide a thorough understanding of certain inventive embodiments. However, it will be apparent that various embodiments may be practiced without these specific details. The figures and description are not intended to be restrictive.

Although the remaining portions of the description will routinely reference lithium-ion battery cells, it will be readily understood by the skilled artisan that the technology is not so limited. The present designs may be employed with any number of battery or energy storage devices, including other rechargeable and primary, or non-rechargeable, cell types, as well as electrochemical capacitors also known as supercapacitors or ultracapacitors, electrolysers, fuel cells, and other electrochemical devices. Moreover, the present technology may be applicable to battery cells and energy storage devices used in any number of technologies that may include, without limitation, phones and mobile devices, handheld electronic devices, wearable devices, laptops and other computers, appliances, heavy machinery, transportation equipment, spacecraft electronics payloads, vehicles, as well as any other device that may use battery cells or benefit from the discussed designs. Accordingly, the disclosure and claims are not to be considered limited to any particular example discussed, but can be utilized broadly with any number of devices that may exhibit some or all of the electrical or chemical characteristics of the discussed examples.

### I. EXEMPLARY BATTERY PACK

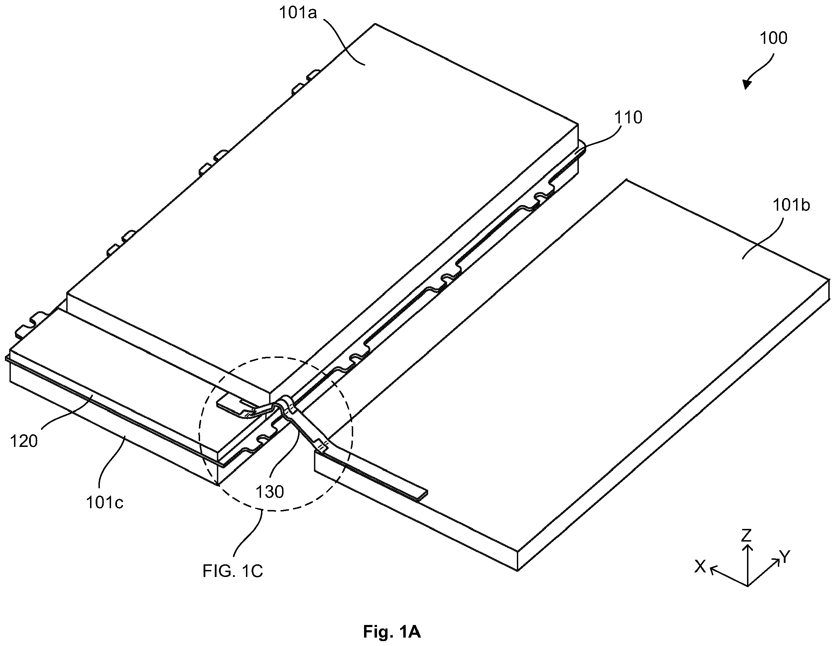

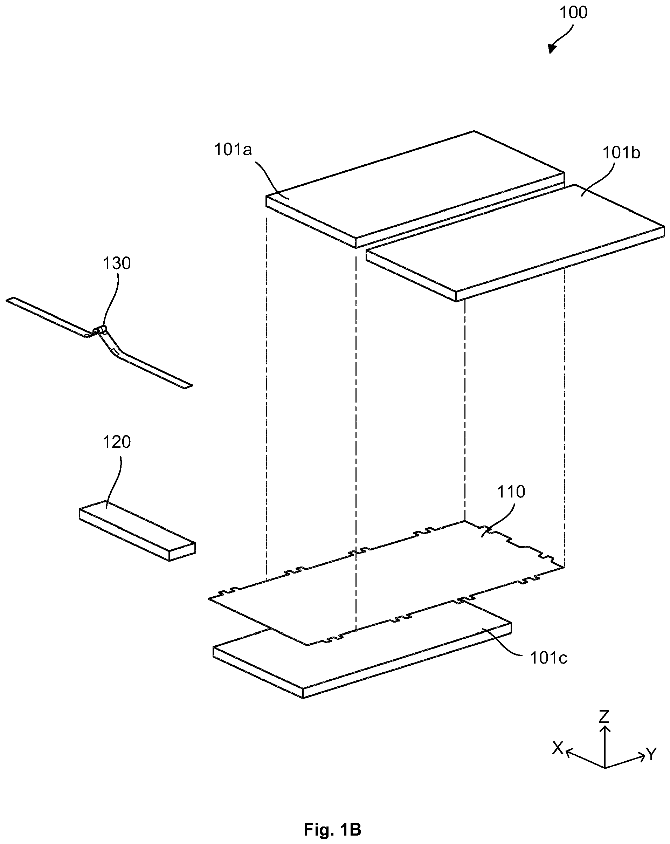

FIGS. 1A-C depict an example battery pack 100, according to embodiments of the disclosure. The battery pack 100 includes battery cells 101a-101c, plate 110, battery management unit (BMU) 120, and flexible busbar 130. The battery cells 101a-101c may be or include a battery cell, and may be one of a number of cells coupled together to form a battery structure. The BMU 120 can be configured to control the operation of the battery cells 101a-101c. The BMU 120 can also be operable to electrically couple the battery cells 101a-101c to components utilizing power from the battery cells 101a-101c and to components providing power to charge the battery cells 101a-101c. The battery cells 101a, 101b and the BMU 120 may be electrically coupled with each other through the flexible busbar 130. The battery cell 101c may be electrically coupled to the BMU 120 separate from the other battery cells 101a, 101b. For example, the battery cell 101c may be directly electrically coupled to the BMU 120 without an intervening busbar. However, in other embodiments, the bottom battery cell may be electrically coupled to the BMU with a busbar separate from the flexible busbar. In yet further embodiments, the flexible busbar may additionally couple the bottom battery cell to the BMU. The plate 110 may be positioned between, and coupled with, the battery cells 101b, 101c. The BMU 120 may be coupled to the plate 110 adjacent an end of the plate 110. The plate 110 may be made from a metal, such as stainless steel, or any other suitable rigid materials. It is understood that the battery pack 100 may include additional components not provided for in this disclosure, such as liners and/or tabs for attaching the battery pack 100 to other components.

As discussed above, increasing the number of battery cells within a battery pack can increase the power output of a battery pack. However, it may be difficult to electrically couple those battery cells together without limiting the shape and size of the battery pack to a particular configuration that is less able to be coupled to electronic devices. In particular, non-flexible busbars (e.g., rigid busbars that are unable to undergo substantial flexion without being damaged) are unable to both couple multiple battery cells together and be manipulable to allow for the battery cells to be re-oriented in a way that provides a space-efficient battery pack.

The flexible busbar 130 can address this issue by electrically coupling the battery cells 101a-101c together while being sufficiently flexible to orient the battery cells 101a-101c together in a manner that allows for the battery pack 100 to have a shape and size that can be optimally and efficiently coupled to other electronic devices. Specifically, the flexible busbar 130 can flexibly position one or more of the battery cells 101a-101c from an open (or first) state (e.g., when the battery cells 101a-101c are initially electrically coupled together with the flexible busbar 130) to a closed (or second) state (e.g., when the battery pack 100 is ready to be coupled with an electronic device). The battery pack 100 may be formed in the open state at a first facility (e.g., where the battery cells 101a-101c are electrically coupled with the busbar 130) and shipped to a second facility where the battery pack 100 transitions to the closed state (e.g., where the battery pack 100 is coupled to an electronic device). The battery pack 100 may be shipped in the first state as the battery pack 100 may be more secure in the shipping tray in the open state. Specifically, the battery cells 101a-101c may be secured to the shipping tray (e.g., by a liner) to minimize the relative movement of the components of the battery pack 100 to each other during shipment. In contrast, it may be more difficult to secure the battery cells 101a-101c to the shipping tray in the closed state, thus leading to a greater likelihood that the components of the battery pack 100 move relative to each other and for the battery pack 100 to be damaged. However, in other embodiments, the battery pack 100 may be formed in the first state, and transitioned to a closed state and shipped out all in the first facility.

FIG. 1A depicts the battery pack 100 in the open (or first) state. In this open state, the battery cells 101a, 101b are positioned laterally from each other along an X-axis. Additionally, certain portions of the flexible busbar 130 are spread laterally from each other along the X-axis, as will be discussed further below. As such, the flexible busbar 130 may facilitate an electrical connection between the battery cells 101a-101c and the BMU 120.

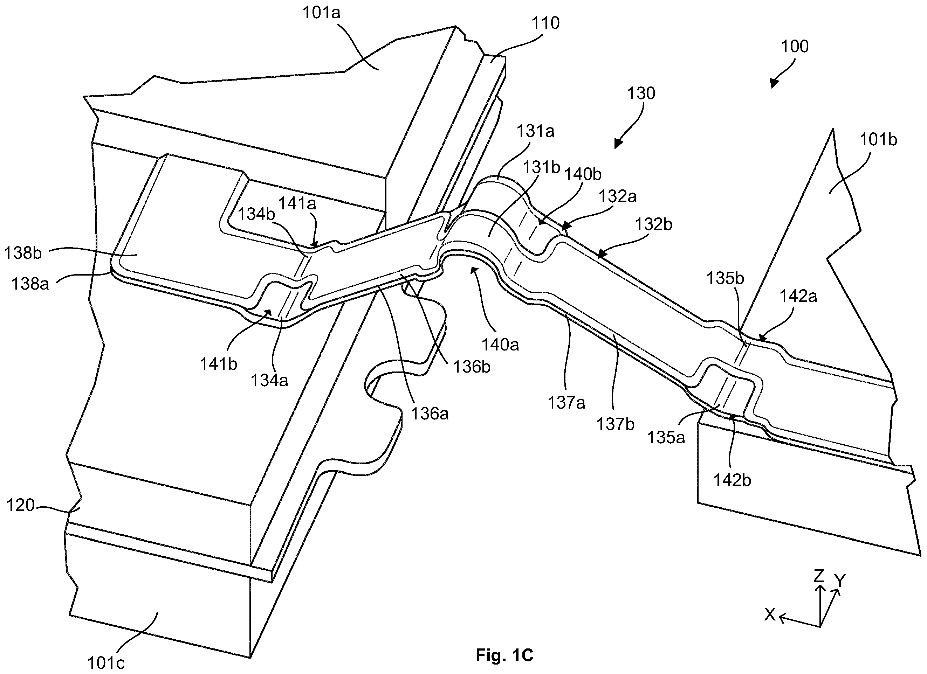

Turning to FIG. 1C, the flexible busbar 130 may include busbar layers 132a, 132b. The busbar layers 132a, 132b may be formed from a metal (e.g., copper, aluminum, stainless steel, brass, or other suitable material), a non-metal material, such as a polymer (e.g., a polyimide or other suitable non-metal material), or composite that may include a conductive material. The busbar layers 132a, 132 may each include a width along the Y-direction of between about 1 mm and 5 mm, such as between about 2 mm and 4 mm, between about 2.5 mm and 3.5 mm, or about 3 mm. The busbar layers 132a, 132 may include a thickness along the Z-direction between about 0.05 mm and 0.5 mm, such as between about 0.1 mm and 0.4 mm, between about 0.15 mm and 0.3 mm, or about 0.2 mm. For example, each of the busbar layers 132a, 132b may include a copper layer between polyimide layers. In this example, the copper layer may have a thickness along the Z-direction of between about 50 µm and 150 µm, such as between about 70 µm and 130 µm, between about 90 µm and 110 µm, or about 100 µm. The polyimide layers may, each, have a thickness along the Z-direction of between about 25 µm and 75 µm, such as between about 35 µm and 65 µm, between about 45 µm and 65 µm, or about 50 µm. However, in other embodiments, the busbar layers may be formed of a singular material or a combination of other materials. The busbar layers 132a, 132b may be coupled together through adhesion (e.g., a pressure sensitive adhesive) or through other coupling means. Accordingly, the busbar layers 132a, 132b may move in unison with each other.

Each of the busbar layers 132a, 132b may electrically couple certain terminals (not shown) of the battery cells 101a, 101b and the BMU 120 to each other. For example, the busbar layers 132a, 132b may enable a parallel or series connection between the battery cells 101a, 101b and the BMU 120 to each other. In one example, the busbar layers 132a, 132b may electrically couple a terminal (e.g., a positive or negative terminal) of the battery cells 101a, 101b to the BMU 120 as well as to each other (e.g., a positive terminal of the battery cell 101a to a negative terminal of the battery cell 101b). Although only two busbar layers 132a, 132b are shown, in other embodiments, there may be more than two busbar layers (e.g., where there are more battery cells and/or terminals to couple together).

Each of the busbar layers 132a, 132b may respectively include intermediate busbar segments 136a, 136b, 137a, 137b and lateral busbar segments 138a, 138b, 139a, 139b. The intermediate busbar segments 136a, 137a, may define an intermediate bend 131a therebetween along the layer 132a. The intermediate busbar segments 136b, 137b, may define an intermediate bend 131b therebetween along the layer 132b. The intermediate busbar segment 136a and the lateral busbar segment 138a may define a lateral bend 134a therebetween along the layer 132a. The intermediate busbar segment 136b and the lateral busbar segment 138b may define a lateral bend 134b therebetween along the layer 132b. The intermediate busbar segment 137a and the lateral busbar segment 139a may define a lateral bend 135a therebetween along the layer 132a. The intermediate busbar segment 137b and the lateral busbar segment 139b may define a lateral bend 135b therebetween along the layer 132b.

The flexible busbar 130 may be flexible by being able to bend about the intermediate bends 131a, 131b and lateral bends 134a, 134b, 135a, 135b along a Y-axis. Specifically, each of the intermediate busbar segments 136a, 136b, 137a, 137b may rotate relative to each other about the respective intermediate bend 131a, 131b. The intermediate busbar segments 136a, 136b may rotate relative to the lateral busbar segments 138a, 138b about the respective lateral bend 134a, 134b. The intermediate busbar segments 137a, 137b may rotate relative to the lateral busbar segments 139a, 139b about the respective lateral bend 135a, 135b. The busbar segments 136a, 136b, 137a, 137b, 138a, 138b, 139a, 139b can be rigid to bend about the bends 131a, 131b, 134a, 134b, 135a, 135b without the busbar segments 136a, 136b, 137a, 137b, 138a, 138b, 139a undergoing substantial deformation (e.g., less than 10° of deformation, such as less than 5° of deformation or no deformation). As such, the busbar segments 136a, 136b, 137a, 137b, 138a, 138b, 139a, 139b can be less flexible than the bends 131a, 131b, 134a, 134b, 135a, 135b.

The bends 131a, 131b, 134a, 134b, 135a, 135b may be pre-formed along the flexible busbar 130 (e.g., pre-formed by bending the flexible busbar 130 about one or more pins during manufacturing) to be biased toward a resting position. In the resting position, the bends 131a, 131b, 134a, 134b, 135a, 135b may include a shape that the bends 131a, 131b, 134a, 134b, 135a, 135b will revert to in the absence of outside forces. Accordingly, the bends 131a, 131b, 134a, 134b, 135a, 135b may bias the busbar segments 136a, 136b, 137a, 137b, 138a, 138b, 139a, 139b to that resting position. For example, the bends 131a, 131b, 134a, 134b, 135a, 135b may be pre-formed to have a resting position as seen in FIG. 1C. Accordingly, the intermediate bends 131a, 131b may bias the busbar segments 136a, 136b, 137a, 137b in an angular direction about the Y-axis opposite an angular direction of the lateral bends 134a, 134b, 135a, 135b. However, in other embodiments, the intermediate bends may bias the flexible busbar in a substantially similar angular direction as the lateral bends (e.g., each of the bends may be biased in an angular direction within about a 20% deviation of each other, such as about a 10% deviation, such as about a 5% deviation or being completely the same).

Further, the bends 131a, 131b, 134a, 134b, 135a, 135b may be pre-formed to allow for greater rotation about the Y-axis, however, as discussed further below, the bends 131a, 131b, 134a, 134b, 135a, 135b may allow for rotation about any of the axes. However, in other embodiments, the bends may be pre-formed to have any resting position such that the busbar segments have a resting position where the busbar segments are at any angle relative to each other.

The bends 131a, 131b, 134a, 134b, 135a, 135b may be pre-formed to have an arcuate shape to minimize the risk that the flexible busbar 130 creases when bent at these locations. Without the arcuate shape, such creases may increase the risk that cracks may form and damage the flexible busbar at the bends. The intermediate bends 131a, 131b may have a larger arcuate radius than the lateral bends 134a, 134b, 135a, 135b as the intermediate bends 131a, 131b may undergo more flexion, as described further below. However, in other embodiments, the bends do not have an arcuate shape and, instead, may define a sharp bend. In yet further embodiments, all of the bends may have a substantially similar arcuate radius (e.g., the radius of the bends may be within about a 20% deviation of each other, such as about a 10% deviation, such as about a 5% deviation or being completely the same). In an even further embodiment, the lateral bends may have a larger arcuate radius than the intermediate bends.

The bends 131a, 131b, 134a, 134b, 135a, 135b may be flexible enough that the maximal angles of rotation about the bends 131a, 131b, 134a, 134b, 135a, 135b from an open state to a closed state is limited by the dimension of the busbar segments 136a, 136b, 137a, 137b, 138a, 138b, 139a, 139b. For example, the intermediate busbar segments 136a, 136b, 137a, 137b can bend about the intermediate bends 131a, 131b from an open state where the intermediate busbar segments 136a, 136b, 137a, 137b are spread apart to a closed state where at least a portion of the intermediate busbar segments 136a, 137a are contacting each other. Similarly, the intermediate busbar segments 136a, 136b and the lateral busbar segments 138a, 138b can bend about the lateral bends 134a, 134b from an open state where the busbar segments 136a, 136b, 138a, 138b are spread apart to a closed state where at least a portion of the intermediate busbar segment 136b and lateral busbar segment 138b are contacting each other. The intermediate busbar segments 137a, 137b and the lateral busbar segments 139a, 139b can bend about the lateral bends 135a, 135b from an open state where the busbar segments 137a, 137b, 139a, 139b are spread apart to a closed state where at least a portion of the intermediate busbar segment 136b and lateral busbar segment 138b are contacting each other. As will be discussed further below, when the flexible busbar 130 is in the closed state, the busbar segments 136a, 136b, 137a, 137b, 138a, 138b, 139a, 139b may be overlapping each other along the Z-axis and may be at least substantially parallel to each other if not at least partially contacting each other. Substantially parallel means that the busbar segments 136a, 136b, 137a, 137b, 138a, 138b, 139a, 139b may have an angle of less than or about 30° relative to each other, such as less than or about 20°, such as less than or about 10°, or be completely parallel with each other.

The bends 131a, 131b, 134a, 134b, 135a, 135b may be flexible enough that the flexible busbar 130 can transition to a closed state from a maximal open state (i.e., an open state where the bends 131a, 131b, 134a, 134b, 135a, 135b do not suffer cracks after 30 cycles of rotation from the open to closed state). For example, the intermediate busbar segments 136a, 136b, 137a, 137b may rotate relative to each other to a closed state about the intermediate bends 131a, 131b from a maximal open state where the busbar segments 136a, 136b, 137a, 137b are at a transverse angle to each other about the Y-axis and the portion of the busbar segments 136a, 136b, 137a, 137b distanced from the intermediate bends 131a, 131b are higher along the Z-axis than the bends 131a, 131b. Accordingly, the intermediate bends 131a, 131b may have an available degree of rotation from the open state to the closed state of between about 0° to about 360°, such as between about 50° to about 330°, between about 100° to about 300°, between about 150° to about 270°, or about 240°. The intermediate busbar segments 136a, 136b, 137a, 137b and the lateral busbar segments 138a, 138b, 139a, 139b may rotate to a closed state relative to each other about respective lateral bends 134a, 134b, 135a, 135b from an open state where the busbar segments 136a, 136b, 137a, 137b, 138a, 138b, 139a, 139b are substantially parallel to each other. Accordingly, the lateral bends 134a, 134b, 135a, 135b may have an available degree of rotation between about 0° to about 180°, such as between about 30° to about 150°, between about 60° to about 120°, or about 90°. The intermediate bends 131a, 131b may have an available degree of rotation greater than the lateral bends 134a, 134b, 135a, 135b to allow the intermediate bends 131a, 131b to bend more with less risk of damage. As the intermediate bends 131a, 131b may require more bending than the lateral bends 134a, 134b, 135a, 135b when installing the battery pack 100 (e.g., when transitioning the battery pack 100 from the open state to the closed state, as will be discussed further below), the greater available degree of rotation allows for the intermediate bends 131a, 131b to bend as required while minimizing the risk of damage to the intermediate bends 131a, 131b. However, in other embodiments, the lateral bends may have a substantially similar degree of rotation as the intermediate (e.g., the degree of rotation of each of the bends may be within about a 20% deviation of each other, such as about a 10% deviation, such as about a 5% deviation or being completely the same).

The busbar layers 132a, 132b may be substantially colinear with each other. In other words, a majority of the busbar layers 132a, 132b may be at least partially overlapping along the X-Y plane and substantially parallel with each other along a same axis (e.g., an X-axis). For example, the busbar segments 136a, 136b, 137a, 137b, 138a, 138b, 139a, 139b may be substantially colinear with each other. Additionally, these busbar segments 136a, 136b, 137a, 137b, 138a, 138b, 139a, 139b may have a substantially similar width to each other to minimize the impedance across the busbar layers 132a, 132b (e.g., the width of each of the busbar segments 136a, 136b, 137a, 137b, 138a, 138b, 139a, 139b may be within about a 20% deviation of each other, such as about a 10% deviation, such as about a 5% deviation or being completely the same). However, because certain portions of the busbar layers 132a, 132b move relative to each other when the flexible busbar 130 transitions from an open state to a closed state, certain portions of the flexible busbar 130 have a smaller cross-sectional width and are offset from each other. Specifically, the bends 131a, 131b, 134a, 134b, 135a, 135b may be offset from each other (e.g., no portions of the bends 131a, 131b, 134a, 134b, 135a, 135b overlap with each other, as discussed below). While the bends 131a, 131b, 134a, 134b, 135a, 135b are substantially parallel to each other so that the busbar layers 132a, 132b may concentrically bend about the same axes, the intermediate bends 131a, 131b, the lateral bends 134a, 134b, and the lateral bends 135a, 135b may be respectively offset from each other. Such an offset allows for the flexible busbar 130 to be flexible while minimizing the risk that the busbar layers 132a, 132b may decouple from each other.

The busbar layers 132a, 132b may define intermediate cutouts 140a, 140b and the busbar layers 132a, 132b define lateral cutouts 141a, 141b, 142a, 142b. Specifically, the intermediate bends 131a, 131b and the intermediate busbar segments 136a, 136b, 137a, 137b may define the intermediate cutouts 140a, 140b therebetween. The lateral bends 134a, 134b, the intermediate busbar segments 136a, 136b, and the lateral busbar segments 138a, 138b may define the lateral cutouts 141a, 141b therebetween. The lateral bends 135a, 135b, the intermediate busbar segments 137a, 137b, and the lateral busbar segments 139a, 139b may define the lateral cutouts 142a, 142b therebetween. The cutouts 140a, 140b, 141a, 141b, 142a, 142b may include a substantially rectangular shape, however, in other embodiments, the cutouts may include any other shape, such as circular, triangular, or the like. The intermediate cutouts 140a, 140b, lateral cutouts 141a, 141b, and lateral cutouts 142a, 142b may be offset from each other. In this manner, the bends 131a, 131b, 134a, 134b, 135a, 135b may be offset from each other such that the bends 131a, 131b, 134a, 134b, 135a, 135b may be exposed by the the cutouts 140a, 140b, 141a, 141b, 142a, 142b when viewed in a Z-direction.

For example, if the bends of the busbar layers have a similar radius (e.g., having a less than about 10% difference in radius, such as less than about 5% difference, or no difference), but were not offset and, instead, were positioned on top of each other, bending the busbar layers would cause a shift between the adjacent busbar segments. This shift increases the risk that the busbar layers decouple from each other. As the bends 131a, 134a, 135a and the bends 131b, 134b, 135b include a substantially similar radius, the bends 131a, 134a, 135a and the bends 131b, 134b, 135b being offset from each other through the corresponding cutouts 140a, 140b, 141a, 141b, 142a, 142b addresses this issue. Specifically, during movement of the flexible busbar 130 about the bends 131a, 131b, 134a, 134b, 135a, 135b, neither of the busbar layers 132a, 132b have to bend about the other. Accordingly, the busbar segments 136a, 137a, 138a, 139a of the busbar layer 132a would not shift relative to the busbar segments 136b, 137b, 138b, 139b of the busbar layer 132b. Thus, the bends 131a, 134a, 135a and the bends 131b, 134b, 135b being offset from each other allows the flexible busbar 130 to be flexible about the bends 131a, 131b, 134a, 134b, 135a, 135b with a decreased risk that the busbar layers 132a, 132b decouple from each other.

Although three battery cells 101a-101c are depicted in FIGS. 1A-C, in other embodiments, there may be two battery cells or more than three battery cells. For example, the battery pack may only include two battery cells electrically coupled to each other via the flexible busbar. In other examples, there may be more than three battery cells coupled to each other by extending the length of the flexible busbar and increasing the number of features for coupling the battery cells together (e.g., increasing the number of tabs for coupling battery cells, as discussed further below). The peak power output of the battery pack 100 may be based on the number of battery cells. For example, with three battery cells, the battery pack may include a peak power output of between about 20 and 150 watts, such as between about 30 and 140 watts, between about 40 and 120 watts, between about 50 and 100 watts, between about 60 and 80 watts. Such peak power output may change corresponding with the number of battery cells electrically coupled together in the battery pack. Such peak power output may allow for the battery pack 100 to be used with a variety of electronic devices. For example, this battery pack 100 may be electrically coupled to electronic devices that require peak power outputs as noted above (e.g., up to 150 watts with three battery cells).

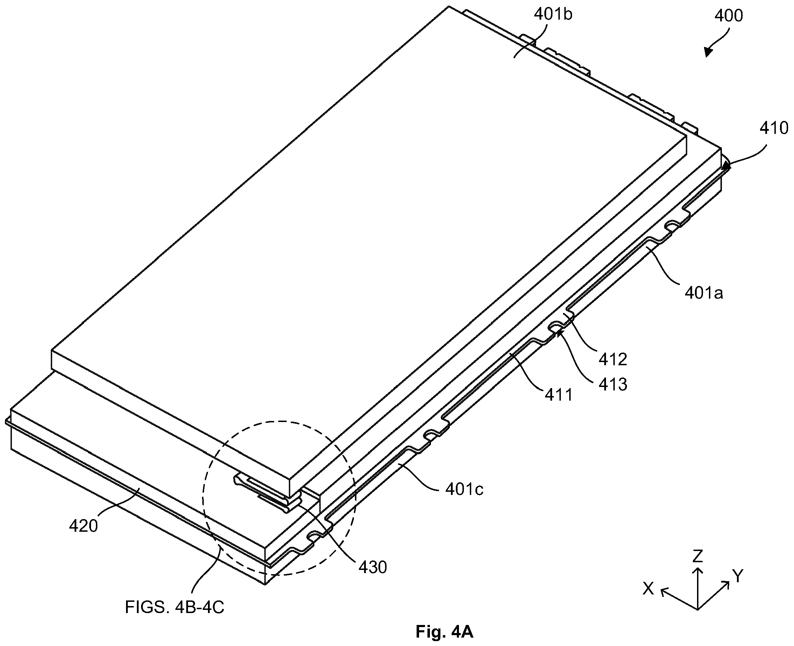

The busbar layers 132a, 132b may be flat along the X-Y plane (e.g., having a rectangular cross-sectional shape). However, in other embodiments, the flexible busbar can have other shapes, such as having a cylindrical shape (e.g., as a wire or cable). The flat shape may have an increased rigidity (e.g., along the busbar segments 136a, 136b, 137a, 137b, 138a, 138b, 139a, 139b) relative to other shapes so that the busbar layers 132a, 132b may better retain their shape during and after assembly. For example, the flat busbar layers 132a, 132b may not droop down as much in the closed state (as shown in FIGS. 4A-4C) in contrast to other shapes, such as if the busbar layers included a cylindrical shape. However, in the other shapes (e.g., a cylindrical shape), the busbar layers may be more flexible, thus allowing for a greater freedom of movement in positioning the battery cells relative to each other.

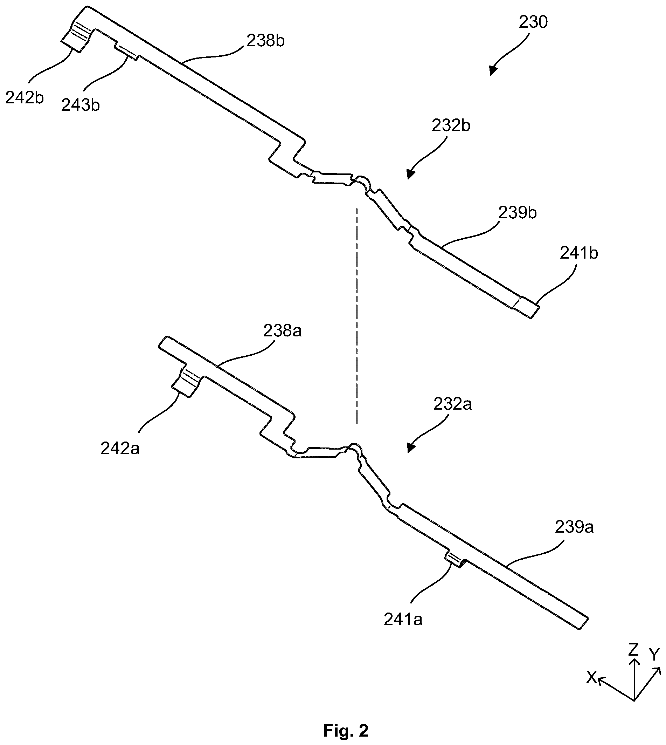

FIG. 2 depicts an example flexible busbar 230. It is understood that features ending in like reference numerals as features discussed above are similar, except as noted below. The busbar layer 232b includes a tab 241b extending from the lateral busbar segment 239b, and tabs 242b, 243b extending from the lateral busbar segment 238b. The busbar layer 232a includes a tab 241a extending from the lateral busbar segment 239a and a tab 242a extending from the lateral busbar segment 238a.

The tabs 241a, 242a, 241b, 242b, 243b may each be configured to electrically couple to other components in a battery pack (e.g., battery cells and a BMU, such as one of the battery cells 101a-101c and the BMU 120). For example, the tab 241b may be electrically coupled to a positive terminal of a first battery (e.g., the battery cell 101b), the tab 243b may be electrically coupled to a negative terminal of a second battery (e.g., the battery cell 101 a), and the tab 242b may be electrically coupled to a BMU (e.g., the BMU 120). In this manner, the busbar layer 232b may electrically couple the first and second batteries to the BMU. Further, the tab 241a may be electrically coupled to a negative terminal of the first battery and the tab 242a may be electrically coupled to the BMU. In this manner, the busbar layer 232b may electrically couple the first battery to the BMU. However, the tabs may be electrically coupled to any other combination of positive and negative terminals.

The position, shape, and size of the tabs 241a, 242a, 241b, 242b, 243b relative to the lateral busbar segments 238a, 238b, 239a, 239b may be adjusted according to the position of those other components. For example, although the tabs 241a, 242a, 241b, 242b, 243b are depicted as being substantially parallel along an X-Y plane but offset from the lateral busbar segments 238a, 238b, 239a, 239b, in other embodiments, the tabs may be coplanar with the lateral busbar segments. Additionally, the tab 241a may be bent around to be positioned beneath the lateral busbar segment 239a along the Z-axis and the tab 243b may be bent around to be positioned beneath the lateral busbar segment 238b along the Z-axis, in other embodiments, the tabs may be bent to be above the busbar segments, or may not be bent to be beneath or above the busbar segments. Additionally, the tabs 242a, 242b, 243b extend from the lateral busbar segments 238a, 238b along a Y-axis, while the tab 241b extends from the lateral busbar segment 239b along an X-axis. However, the tabs can extend from the lateral busbar segments along any of the axes.

The shape and size of the lateral busbar segments 238a, 238b, 239a, 239b may also be adjusted to account for other components of the battery pack. For example, portions of the lateral busbar segments 238a, 238b may be offset (e.g., along the Y-axis) from the lateral busbar segments 239a, 239b to account for other components of the battery pack, such as the BMU or the location of the terminals of the battery cells. In other embodiments, the busbar segments can have any other shape, including being symmetrical about the bends or the like. Further, the lateral busbar segments 238b, 239a may be longer than the lateral busbar segments 238a, 239b, however, in other embodiments, the lengths of the lateral busbar segments may be reversed or substantially similar (e.g., the lengths of each of the busbar segments may be within about a 20% deviation of each other, such as about a 10% deviation, such as about a 5% deviation or being completely the same).

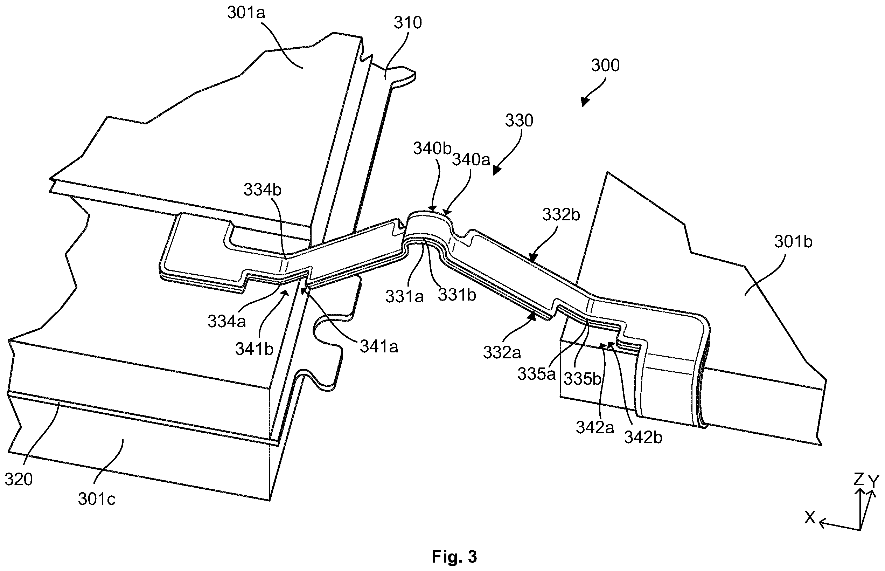

FIG. 3 depicts an example battery pack 300, according to embodiments of the disclosure. It is understood that features ending in like reference numerals as features discussed above are similar, except as noted below. The flexible busbar 330 may include busbar layers 332a, 332b defining bends 331a, 331b, 334a, 334b, 335a, 335b. The bends 331a, 334a, 335a of the busbar layer 332a may be overlapping and parallel with the bends 331b, 334b, 335b of the busbar layer 332b rather than offset. The bends 331a, 331b, 334a, 334b, 335a, 335b may overlap each other such that no portion of the bends 331a, 334a, 335a extend past the 331b, 334b, 335b along a Y-direction. However, in other embodiments, a portion of at least one of the bends may extend past a corresponding, overlapping bend. Further the cutouts 340a, 340b, 341a, 341b, 342a, 342b may not be offset from each other. However, in other embodiments, there may be no cutouts such that the bends and busbar segments have substantially the same width along a length of the busbar layers. This embodiment may be beneficial because the busbar layers 332a, 332b stacked on each other along the bends 331a, 331b, 334a, 334b, 335a, 335b increases the rigidity and structural integrity of the bends 331a, 331b, 334a, 334b, 335a, 335b. Although the busbar layers 332a, 332b define the bends 331a, 331b, 334a, 334b, 335a, 335b to have a smaller width than other portions of the busbar layers 332a, 332b (i.e., along the busbar segments), in other embodiments, the busbar layers may have a similar width along its length.

FIGS. 4A-4C depict an example battery pack 400, according to embodiments of the disclosure. It is understood that features ending in like reference numerals as features discussed above are similar, except as noted below. The battery pack 400 may be the same as the battery pack 100 except the battery pack 400 is in a closed state. In this closed state, the battery cells 101a-101c are all at least partially positioned and overlapping each other along the Z-axis. This stacked position may be beneficial to minimize the total area occupied by the battery pack 400 along the X-Y plane, which may allow for the battery pack 400 to be more easily installed in an electronic device. However, in other embodiments, the battery cells may not be stacked along the Z-axis and, instead, may be positioned relative to each other in any manner desired for installation within an electronic device.

The plate 410 may include a plate body 411 with extensions 412 extending from the plate body 411. The battery cells 401a, 401c may be coupled (e.g., using adhesive or the like) to opposing sides of the plate body 411. The extensions 412 may define a slot 413. The extensions 412 and slot 413 may be configured to engage with other components, such as a housing of an electronic device (not shown). In this manner, the plate body 411 and other components coupled to the plate body 411 (e.g., the battery cells 401a, 401c) can be suspended within the electronic device. In other embodiments, there may be any number of extensions extending from the plate body, each of which may extend in any direction, and have any shape or size. Further, in other embodiments, there may be any number of slots defined by the extension, each of which may have any size or shape.

The battery cells 401a-401c may be offset from each other along the X- and Y-axes to account for other components or to account for the particular geometries of the electronic device that the battery pack 400 will be installed in. For example, the battery cell 401a may be offset from battery cells 401b, 401c along the Y-axis a distance to account for the space occupied by the BMU 420. In this manner, the BMU 420 may extend past the plate 410 along the Y-axis such that ends of the BMU 420 and battery cells 401b, 401c are coplanar with each other. However, in other embodiments, the battery cells may all be substantially colinear with each other when stacked along the Z-axis.

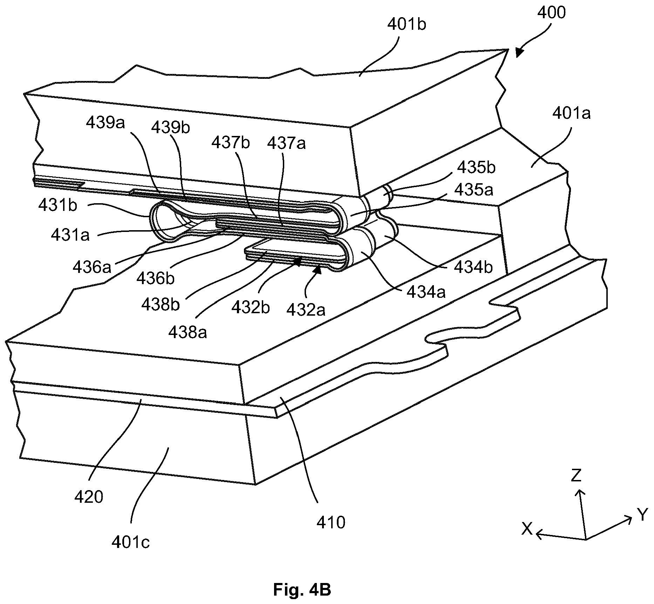

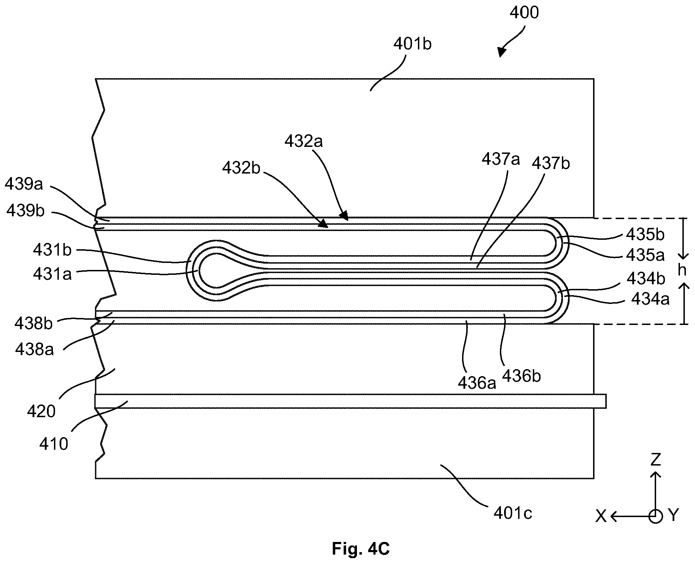

Turning to FIGS. 4B and 4C, the busbar segments 436a, 436b, 437a, 437b, 438a, 438b, 439a, 439b are bent about the bends 434a, 434b, 434a, 434b, 435a, 435b such that the busbar segments 436a, 436b, 437a, 437b, 438a, 438b, 439a, 439b are overlapping along the Z-axis. The busbar segments 436a, 436b, 437a, 437b, 438a, 438b, 439a, 439b may be substantially parallel with each other.

The construction of the battery pack 400 may additionally account for the battery cells 401a-401c swelling. Specifically, when installed in an electronic device, the battery pack 400 may be coupled to the electronic device by securing the plate 410 to the electronic device. In this configuration, the plate 410may be suspended in the air as the plate 410 may be secured to the electronic device a distance along the Z-axis from other components of the electronic device. As the battery cells 401a, 401c are coupled to the plate 410, the battery cells 401a, 401c may correspondingly be suspended in the air. Meanwhile the battery cell 401b may be positioned beneath the battery cells 401a, 401c. The battery cell 401b may be coupled to a portion of the electronic device below the battery cells 401a, 401c. In this configuration, a gap h may be defined between the battery cell 401a suspended in the air by the plate 410 and the battery cell 401b positioned below the battery cell 401a.

The gap h may account for the battery cells 401a, 401b swelling (e.g., when the battery cells 401a, 401b heat up). It should be understood that the gap has depicted in FIG. 4C is for illustrative purposes only and that the battery cells 401a, 401b may be further or closer to define the gap h than as shown. In use, when the battery cells 401a, 401b are swelling, the gap h provides room for the battery cells 401a, 401b to swell towards each other. This may be beneficial to reduce the stresses applied to the electronic device when the battery cells 401a-401c swell. For example, if the battery cells were coupled to the electronic device with no gap, the battery cells' swelling would apply stress to the other battery cells as well as to the electronic device, which may result in damage to the battery cells or the electronic device. The gap h solves this issue by providing some space for this swelling so that less stress may be applied to the battery cells 401a, 401b and the electronic device when the battery pack 400 is in use.

The gap h may have a maximal dimension when the battery cells 401a, 401b are not swollen (e.g., at a resting temperature when not in use, such as shown in FIG. 4C). The gap h may increase and decrease as the battery cells 401a, 401b heat up and swell, and then cool down and return to its resting size. Additionally, when the battery cells 401a, 401b swell into the gap h and then reduce down in size, one or more of the bends 434a, 434b, 434a, 434b, 435a, 435b may also be correspondingly compressed and expanded along the Z-axis as the lateral busbar segments 436a, 436b, 437a, 437b moved toward and away from each other.

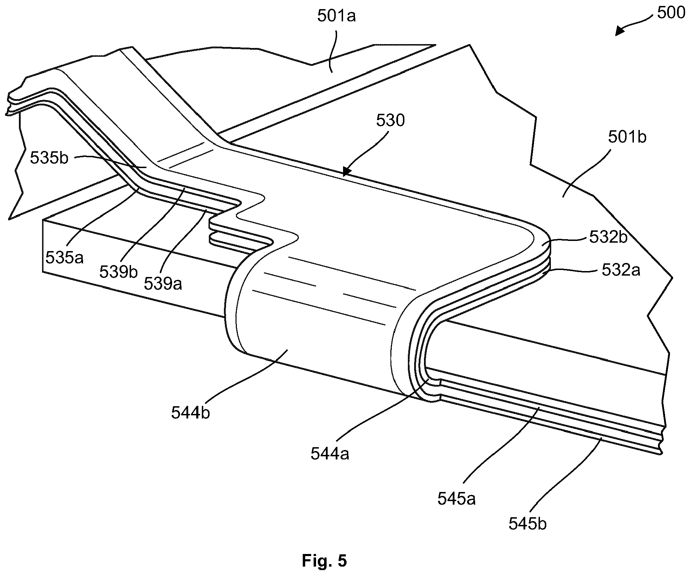

FIG. 5 depicts a partial view of an exemplary battery pack 500, according to embodiments of the disclosure. It is understood that features ending in like reference numerals as features discussed above are similar, except as noted below. The busbar layers 532a, 532b may respectively define a bend 544a, 544b between the lateral busbar segments 539a, 539b and end busbar segments 545a, 545b. One of the lateral busbar segments 539a, 539b or the end busbar segments 545a, 545b may be coupled to the battery cell 501b (e.g., through an adhesive or the like) while the other set of busbar segments 539a, 539b, 545a, 545b are not coupled to the battery cell 501b. For example, the end busbar segments 545a, 545b may be coupled to the battery cell 501b while the lateral busbar segments 539a, 539b are not coupled to the battery cell 501b. In this manner, when in use and the battery pack 500 is in a closed state, the end busbar segments 545a, 545b may accommodate for the battery cell 501b swelling. Specifically, when the battery cell 501b swells, the end busbar segments 545a, 545b may move with the swelling by rotating about the bend 544a, 544b.

In some embodiments, the bend 544a, 544b may be pre-formed to have a resting shape as shown in FIG. 5. Accordingly, the bend 544a, 544b and busbar segments 539a, 539b will be biased to return to this resting shape when the battery cell 501b cools down. In some embodiments, the other end of the busbar 530 may also include a similar configuration of busbar segments 539a, 539b, 545a, 545 and bend 544a, 544b to account for swelling of the battery cell 501a. In another embodiment, the lateral busbar segments may be coupled to the battery while the end busbar segments are not coupled to the battery. In a yet further embodiment, neither the lateral nor end busbar segments are coupled to the battery and, instead, the bend is coupled to the battery.

### II. EXEMPLARY METHOD OF INSTALLING A BATTERY PACK

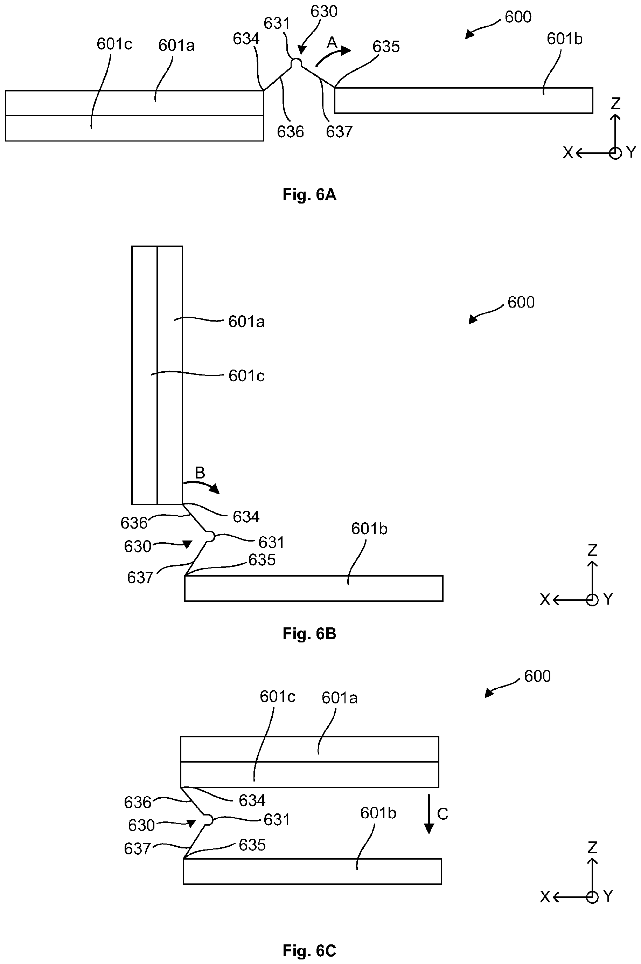

FIGS. 6A-C depict a simplified view of an example method of installing a battery pack 600 from an open state to a closed state, according to embodiments of the disclosure. It is understood that features ending in like reference numerals as features discussed above are similar, except as noted below. As an initial step, the battery cells 601a, 601c may be coupled together (e.g., by being adhered to opposing sides of a plate, such as plate 110, as previously discussed). A flexible busbar 630 may then electrically couple the battery cells 601a, 601b and a BMU (not shown) together adjacent bends 634, 635.

Turning to FIG. 6A, the flexible busbar 630 and the battery cells 601a, 601c may be rotated about a Y-axis about the bend 635, as denoted by Arrow A. The flexible busbar 630 and the battery cells 601a, 601c may be rotated until the intermediate bend 631 points toward an X-direction. For example, the flexible busbar 630 and the battery cells 601a, 601c may be rotated substantially about 90°, such as between about 30° to about 120°, between about 50° to about 110°, or between about 70° to about 100°.

Turning to FIG. 6B, the battery cells 601a, 601c may be rotated about a Y-axis about the bend 634, as denoted by Arrow B. The battery cells 601a, 601c may be rotated about a Y-axis about the bend 634 until the battery cells 601a, 601c are positioned over the battery cell 601b along the Z-axis. For example, the battery cells 601a, 601 may be rotated substantially about 90°. It is understood that either of the rotations about the Arrows A, B can be performed in any order. For example, the battery cells 601a, 601c can be rotated about the Arrow B prior to rotating the flexible busbar 630 and the battery cells 601a, 601c about the arrow A. The battery cell 601b may be coupled to the electronic device at this point (e.g., via adhesive), however, in other embodiments, the battery may be coupled to the electronic device at any point in the process.

Turning to FIG. 6C, the battery cells 601a, 601c may be moved toward the battery cell 601b along the Z-axis until the battery pack 600 is in a closed state. For example, the battery cells 601a, 601c may be moved toward the battery cell 601b until the busbar segments 636, 637 are substantially parallel with each other (e.g., as shown in FIGS. 4A-4C). Although not shown, the battery cells 601a, 601c may include additional movements to move the battery cells 601a, 601c relative to the battery cell 601b to the closed state. For example, the battery cells 601a, 601c may be translated along any of the X-, Y- or Z-axes, and there may include additional rotations about the bends 634, 635 about any of the X-, Y- or Z-axes. In further embodiments, any of the battery cells can be rotated or translated about the busbar relative to each other rather than only one set of battery cells towards another battery, as shown in FIGS. 6A-6C. The battery cells 601a, 601c may be coupled to an electronic device (e.g., though a plate, such as plate 110, as discussed above).

In the foregoing specification, embodiments of the disclosure have been described with reference to numerous specific details that can vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction. The specific details of particular embodiments can be combined in any suitable manner without departing from the spirit and scope of embodiments of the disclosure.

Additionally, spatially relative terms, such as "bottom or "top" and the like can be used to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as a "bottom" surface can then be oriented "above" other elements or features. The device can be otherwise oriented (e.g., rotated 90 degrees or at other orientations) and the spatially relative descriptors used herein interpreted accordingly.

Terms "and," "or," and "an/or," as used herein, may include a variety of meanings that also is expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of' if used to associate a list, such as A, B, or C, can be interpreted to mean any combination of A, B, and/or C, such as A, B, C, AB, AC, BC, AA, AAB, ABC, AABBCCC, etc.

Reference throughout this specification to "one example," "an example," "certain examples," or "exemplary implementation" means that a particular feature, structure, or characteristic described in connection with the feature and/or example may be included in at least one feature and/or example of claimed subject matter. Thus, the appearances of the phrase "in one example," "an example," "in certain examples," "in certain implementations," or other like phrases in various places throughout this specification are not necessarily all referring to the same feature, example, and/or limitation. Furthermore, the particular features, structures, or characteristics may be combined in one or more examples and/or features.

In some implementations, operations or processing may involve physical manipulation of physical quantities. Typically, although not necessarily, such quantities may take the form of electrical or magnetic signals capable of being stored, transferred, combined, compared, or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining," or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter. Therefore, it is intended that claimed subject matter not be limited to the particular examples disclosed, but that such claimed subject matter may also include all aspects falling within the scope of appended claims, and equivalents thereof.

Exemplary embodiments of the present disclosure are set out in the following items and articles:

### Items

1. A flexible busbar, comprising:
   a first busbar layer including a first plurality of busbar segments and a first bend between first busbar segments of the first plurality of busbar segments; and
   a second busbar layer coupled to the first busbar layer; the second busbar layer including a second plurality of busbar segments and a second bend between second busbar segments of the second plurality of busbar segments, wherein:
      the first plurality of busbar segments is substantially colinear with the second plurality of busbar segments; and
      the second bend is substantially parallel with the first bend.
2. The flexible busbar of item 1, wherein:
   the first bend is biased to spread the first busbar segments away from each other; and
   the second bend is biased to spread the second busbar segments away from each other.
3. The flexible busbar of item 2, wherein:
   the first bend is biased to spread the first busbar segments away from each other in a first direction; and
   the second bend is biased to spread the second busbar segments away from each other in the first direction.
4. The flexible busbar of item 3, wherein:
   the first busbar layer includes a third bend between a first intermediate busbar segment of the first busbar segments and a first lateral busbar segment of the first plurality of busbar segments;
   the second busbar layer includes a fourth bend between a second intermediate busbar segment of the second busbar segments and a second lateral busbar segment of the second plurality of busbar segments;
   the third bend is biased to spread the first intermediate busbar segment and the first lateral busbar segment in a second direction different than the first direction; and
   the fourth bend is biased to spread the second intermediate busbar segment and the second lateral busbar segment in the second direction.
5. The flexible busbar of item 4, wherein the second direction is opposite the first direction.
6. The flexible busbar of any of items 4-5, wherein:
   the first busbar layer includes a fifth bend between a third intermediate busbar segment of the first busbar segments and a third lateral busbar segment of the first plurality of busbar segments;
   the second busbar layer includes a sixth bend between a fourth intermediate busbar segment of the second busbar segments and a fourth lateral busbar segment of the second plurality of busbar segments;
   the first bend is positioned between the third and fifth bends along the first busbar layer; and
   the second bend is positioned between the fourth and sixth bends along the first busbar layer.
7. The flexible busbar of any of items 1-6, wherein the first and second bends are offset from each other.
8. The flexible busbar of any of items 1-7, wherein the first and second bends are overlapping.
9. The flexible busbar of any of items 1-8, wherein the first and second bends include a first arcuate shape.
10. The flexible busbar of item 9, wherein:
   the first busbar layer includes a third bend and the second busbar layer includes a fourth bend;
   the third bend and fourth bend includes a second arcuate shape; and
   the first arcuate shape having a larger radius than the second arcuate shape.
11. A battery pack, comprising:
   a first battery cell;
   a second battery cell; and
   a flexible busbar electrically coupling, and positioned between, the first battery cell and the second battery cell, the flexible busbar including busbar segments and a pre-formed bend therebetween, wherein:
      the first battery cell is positioned on the second battery cell and the busbar segments are overlapping on each other about the pre-formed bend in a closed state; and
      the flexible busbar is configured to spread the first and second battery cells, and the busbar segments, away from each other to an open state.
12. The battery pack of item 11, wherein, in the open state, the first and second battery cells are positioned laterally from each other, and the busbar segments are laterally spread from each other about the pre-formed bend.
13. The battery pack of any of items 11-12, further comprising a battery management unit coupled to the first and second battery cells.
14. The battery pack of any of items 11-13, wherein the busbar segments are substantially parallel with each other.
15. The battery pack of any of items 11-14, wherein the first and second battery cells define a gap therebetween.
16. The battery pack of any of items 11-15, wherein the flexible busbar is positioned between the first and second battery cells.
17. The battery pack of item 16,
   further comprising a third battery cell; and
   the first battery cell is positioned between the third battery cell and the second battery cell.
18. A method of assembling a battery pack, comprising:
   electrically coupling a flexible busbar to a first battery cell, the flexible busbar including busbar segments and a pre-formed bend therebetween;
   electrically coupling the flexible busbar to a second battery cell, the first and second battery cells are positioned laterally from each other, and the busbar segments are laterally spread from each other about the pre-formed bend; and
   bending the flexible busbar at the pre-formed bend along the flexible busbar to position the first battery cell on the second battery cell.
19. The method of item 18, further comprising bending the flexible busbar at a second bend to position the first and second battery cells closer to each other.
20. The method of any of items 18-19, wherein the flexible busbar is positioned between the first and second battery cells.

### Articles

1. A battery pack, comprising:
   a plurality of battery cells;
   a plurality of plates coupled between adjacent battery cells of the plurality of battery cells, wherein the plates include a plate body and support ledges extending from the plate body; and
   a plurality of support tabs, wherein:
      each support tab of the plurality of support tabs is positioned between, and abuts against, support ledges of adj acent plates of the plurality of plates; and
      each support tab of the plurality of support tabs secures adjacent plates of the plurality of plates to each other; and
   a busbar electrically coupling the plurality of battery cells together.
2. The battery pack of article 1, wherein:
   a first plate of the plurality of plates includes a first ledge;
   a second plate of the plurality of plates includes a second ledge; and
   the first ledge and the second ledge are offset from each other.
3. The battery pack of article 2, wherein a first support tab of the plurality of support tabs defines a first support area that receives the first ledge and a second support area that receives the second ledge.
4. The battery pack of article 3, wherein:
   the first support tab includes a support tab body, and a first support tab extension and a second support tab extension extending from opposite ends of the support tab body; and
   the first support tab extension and the support tab body defines the first support area and the second support tab extension and the support tab body defines the second support area.
5. The battery pack of article 4, wherein:
   the first support tab extension is offset from the second support tab extension; and
   the first support area is offset from the second support area.
6. The battery pack of any of articles 4-5, wherein the first and second support tab extensions are coupled to the plates.
7. The battery pack of article 6, wherein the first and second support tab extensions are welded to the plates.
8. The battery pack of any of articles 1-7, wherein:
   a first plate of the plurality of plates defines a first sidewall and a second sidewall;
   a first battery cell of the plurality of battery cells positioned between the first sidewall and second sidewall; and
   a first space is defined between the first battery cell and the second sidewall and a second space is defined between the second battery cell and the second sidewall.
9. The battery pack of any of articles 1-8, wherein:
   a first battery cell of the plurality of battery cells is positioned between a first plate and a second plate of the plurality of plates;
   the first battery cell is coupled to the first plate; and
   the first battery cell and the second plate define a space therebetween.
10. A battery pack, comprising:
   a plurality of plates, wherein:
      each plate of the plurality of plates includes a plate body and mounting ledge extending from the plate body;
      the mounting ledges are configured for securing the battery back to a housing;
   a plurality of battery cells, wherein:
      each plate of the plurality of plates is coupled between adjacent battery cells of the plurality of battery cells; and
      each battery cell of the plurality of battery cells is secured to one of the plate bodies of the plurality of plates; and
   a busbar electrically coupling the plurality of battery cells together.
11. The battery pack of article 10, wherein;
   each plate of the plurality of plates includes a support ledge extending from the plate body; and
   the support ledges and the mounting ledges are transverse and coplanar with each other.
12. The battery pack of article 11,
   further comprising a plurality of support tabs; and
   wherein each support tab of the plurality of support tabs positioned between adjacent support ledges.
13. The battery pack of article 12, wherein:
   each support tab includes a support tab body, and a first support tab extension and a second support tab extension extending from opposite ends of the support tab body; and
   the first support tab extension and the support tab body defines a first support area that receives a first support ledge of the support ledges and the second support tab extension and the support tab body defines a second support area that receives a second support ledge of the support ledges.
14. The battery pack of article 13, wherein:
   the first and second support ledges are offset from each other;
   the first and second support tab extensions are offset from each other; and
   the first and second support areas are offset from each other.
15. A method of forming a battery pack, comprising:
   coupling a plurality of plates between a plurality of battery cells, the plates including a plate body and support ledges extending laterally from the plate body;
   after coupling the plurality of plates between the plurality of battery cells, welding a support tab to adjacent plates of the plurality of plates in a welding direction toward the plurality of battery cells; and
   electrically coupling the plurality of battery cells together with a busbar.
16. The method of article 15,
   wherein:
   the support tab includes a support tab body, and a first support tab extension and a second support tab extension extending from opposite ends of the support tab body; and
   the first support tab extension and the support tab body defines a first support area and the second support tab extension and the support tab body defines a second support area; and
   the method further comprises positioning the support tab body between the support ledges such that a first support ledge of a first plate of the plurality of plates is positioned within the first support area and a second support ledge of a second plate of the plurality of plates is positioned within the second support area.
17. The method of article 16, wherein:
   the first and second support ledges are offset from each other;
   the first and second support tab extensions are offset from each other; and
   the first and second support areas are offset from each other.
18. The method of any of articles 15-17,
   wherein:
   a first plate of the plurality of plates includes a first sidewall and a second sidewall; and
   coupling the plurality of plates between the plurality of battery cells includes positioning a first battery cell of the plurality of battery cells between the first and second sidewalls; and
   before welding the support tab to the adjacent plates, the method further comprises positioning a shield between the first sidewall and the first battery cell to intersect an axis defined by the welding direction.
19. The method of article 18, wherein welding the support tab to the adjacent plates includes welding the support tab to the first sidewall along the welding direction.
20. The method of any of articles 18-19, further comprising, after welding the support tab to the adjacent plates, removing the shield from between the first sidewall and the first battery cell.

## Claims

1. A flexible busbar, comprising:
a first busbar layer including a first plurality of busbar segments and a first bend between first busbar segments of the first plurality of busbar segments; and
a second busbar layer coupled to the first busbar layer; the second busbar layer including a second plurality of busbar segments and a second bend between second busbar segments of the second plurality of busbar segments, wherein:
the first plurality of busbar segments is substantially colinear with the second plurality of busbar segments; and
the second bend is substantially parallel with the first bend.

2. The flexible busbar of claim 1, wherein:
the first bend is biased to spread the first busbar segments away from each other; and
the second bend is biased to spread the second busbar segments away from each other.

3. The flexible busbar of any of claims 1 or 2, wherein:
the first busbar layer includes a third bend between a first intermediate busbar segment of the first busbar segments and a first lateral busbar segment of the first plurality of busbar segments;
the second busbar layer includes a fourth bend between a second intermediate busbar segment of the second busbar segments and a second lateral busbar segment of the second plurality of busbar segments;
the third bend is biased to spread the first intermediate busbar segment and the first lateral busbar segment in a second direction different than the first direction;
the fourth bend is biased to spread the second intermediate busbar segment and the second lateral busbar segment in the second direction.

4. The flexible busbar of claim 3, wherein the second direction is opposite the first direction.

5. The flexible busbar of any of claims 3 or 4, wherein:
the first busbar layer includes a fifth bend between a third intermediate busbar segment of the first busbar segments and a third lateral busbar segment of the first plurality of busbar segments;
the second busbar layer includes a sixth bend between a fourth intermediate busbar segment of the second busbar segments and a fourth lateral busbar segment of the second plurality of busbar segments;
the first bend is positioned between the third and fifth bends along the first busbar layer; and
the second bend is positioned between the fourth and sixth bends along the first busbar layer.

6. The flexible busbar of any of claims 1-5, wherein the first and second bends are at least one of offset from each other, overlapping, or including a first arcuate shape.

7. The flexible busbar of any of claim 1-6, wherein:
the first busbar layer includes a third bend and the second busbar layer includes a fourth bend;
the third bend and fourth bend includes a second arcuate shape; and
the first arcuate shape having a larger radius than the second arcuate shape.

8. A battery pack, comprising:
a first battery cell;
a second battery cell; and
the flexible busbar of any of claims 1-7 electrically coupling, and positioned between, the first battery cell and the second battery cell, wherein:
the first battery cell is positioned on the second battery cell and the busbar segments are overlapping on each other about the first bend and second bend in a closed state; and
the flexible busbar is configured to spread the first and second battery cells, and the respective first busbar segments and second busbar segments, away from each other to an open state.

9. The battery pack of claim 8, wherein, in the open state, the first and second battery cells are positioned laterally from each other, and the respective first busbar segments and second busbar segments are laterally spread from each other about the respective first bend and second bend.

10. The battery pack of any of claims 8 or 9, wherein the first busbar segments and second busbar segments are substantially parallel with each other.

11. The battery pack of any of claims 8-10, wherein the first and second battery cells define a gap therebetween.

12. The battery pack of any of claims 8-11,
further comprising a third battery cell; and
the first battery cell is positioned between the third battery cell and the second battery cell.

13. A method of assembling a battery pack, comprising:
electrically coupling a flexible busbar to a first battery cell, the flexible busbar including busbar segments and a pre-formed bend therebetween;
electrically coupling the flexible busbar to a second battery cell, the first and second battery cells are positioned laterally from each other, and the busbar segments are laterally spread from each other about the pre-formed bend; and
bending the flexible busbar at the pre-formed bend along the flexible busbar to position the first battery cell on the second battery cell.

14. The method of claim 13, further comprising bending the flexible busbar at a second bend to position the first and second battery cells closer to each other.

15. The method of any of claims 13 or 14, wherein the flexible busbar is positioned between the first and second battery cells.
